# EUROPÄISCHE PATENTSCHRIFT

(11) **EP 1 766 258 B1**
(45) Veröffentlichungstag und Bekanntmachung des Hinweises auf die Patenterteilung: **25.02.2009**
(21) Anmeldenummer: 05759095.2
(22) Anmeldetag: 30.06.2005
(51) Int. Cl.: F16D 65/092, F16D 65/097

(54) **BREMSBELAG FÜR EINE SCHEIBENBREMSE EINES SCHIENENFAHRZEUGES**
BRAKE LINING FOR A DISK BRAKE OF A RAIL VEHICLE
GARNITURE D'UN FREIN A DISQUE D'UN VEHICULE FERROVIAIRE

(30) Priorität: 01.07.2004 DE 102004031791
(43) Veröffentlichungstag der Anmeldung: 28.03.2007
(73) Patentinhaber: KNORR-BREMSE Systeme für Schienenfahrzeuge GmbH, 80809 München (DE)
(72) Erfinder: MÜLLER, Gabriel, 86830 Schwabmünchen (DE); WIRTH, Xaver, 85737 Ismaning (DE)
(74) Vertreter: Specht, Peter
(86) Internationale Anmeldenummer: PCT/EP2005/007023
(87) Internationale Veröffentlichungsnummer: WO 2006/002903

(56) Entgegenhaltungen:
- WO-A-03/098068
- DE-A1- 3 333 670
- DE-C1- 19 709 962

## Beschreibung

Die vorliegende Erfindung betrifft einen Bremsbelag für eine Scheibenbremse eines Fahrzeuges, insbesondere eines Schienenfahrzeuges, gemäß dem Oberbegriff des Anspruchs 1.

Derartige Bremsbeläge sind beispielsweise aus der EP 0 784 761 B1 bekannt. Hier weist jedes der Reibelemente einen die Bremsscheibe im Bremsfall reibend kontaktierenden Reibbelag aus einem Sintermetall auf.

Prinzipiell bieten Reibbeläge aus einem Sintermetall gegenüber anderen, nicht metallischen Reibbelägen erhebliche Vorteile. Dies betrifft insbesondere eine hohe Temperaturbeständigkeit sowie die Vermeidung von Geruchs- oder Rauchbelästigungen.

Nachteilig ist jedoch, dass die Sintermetalle beim Bremsbetrieb Quietschgeräusche verursachen, vor allem aufgrund der materiellen Anbindung an die Trägerplatte, durch die die Quietschgeräusche erzeugenden Schwingungen ungehindert entstehen können.

Diese für die Passagiere äußerste unangenehmen Geräusche stehen einer breiten Einführung, insbesondere im Personen-Nahverkehr im Wege.

Trotz vieler Versuche durch Materialmischungen oder konstruktive Gestaltungen der Reibbeläge sind bislang keine befriedigenden Lösungen gefunden worden, die einen breiten akzeptablen Einsatz metallischer Reibbeläge ermöglicht hätten.

Ein gattungsgemäßer Bremsbelag ist aus der WO 03/098068 A1 bekannt. Ein darin gezeigtes Reibelement ist in einem als Federblech ausgebildeten Dämpfungselement gelagert, wobei sich dieses Dämpfungselement an der Trägerplatte abstützt.

In der DE 197 09 962 C1 sind Reibelementes eines Bremsbelages gezeigt und beschrieben, die jeweils mittels einer Spannfeder an der Trägerplatte gehalten sind, wobei sich die Spannfeder auf der dem Reibelement abgewandten Seite der Trägerplatte abstützt, während das Reibelement selbst unmittelbar an der Trägerplatte anliegt.

Aus der DE 33 33 670 A1 ist eine Schwimmsattelbremse für Kraftfahrzeuge bekannt, bei der zur Geräuschdämpfung zwischen der Scheibenbremse und einem Bremsträger in Umfangsrichtung der Bremsscheibe gesehen nachgiebige Anschläge, insbesondere aus Gummi oder einem nachgiebigen Kunststoff wie Elastomer zwischen den Stirnseiten des Bremsbelages und Anschlägen des Bremsträgers vorgesehen sind.

Der vorliegenden Erfindung liegt daher die Aufgabe zugrunde, einen Bremsbelag der gattungsgemäßen Art so weiter zu entwickeln, dass seine Benutzungsakzeptanz verbessert wird.

Diese Aufgabe wird durch einen Bremsbelag gelöst, der die Merkmale des Anspruchs 1 aufweist.

Danach ist mindestens an einem der, vorzugsweise an jedem der Reibelemente insbesondere zwischen jedem Reibelement und der Trägerplatte zur Unterbrechung oder Minderung der Übertragung von Schallschwingungen ein Dämpfungselement vorgesehen.

Durch diese konstruktive Maßnahme wird erreicht, dass die Reibelemente schwingungstechnisch von der Trägerplatte abgekoppelt sind. Überraschend hat sich gezeigt, dass dadurch das beschriebene unangenehme Quietschen nicht mehr auftritt.

Zwar sind geräuschdämmende Schichten z.B. aus einem Elastomer von Bremsbelägen für Kraftfahrzeuge an sich bekannt. Über diese erfolgt aber i.d.R. keine Übertragung von Bremskräften. Nicht erwogen wurde zudem der Einsatz derartiger Elemente an den sehr heiß werdenden gattungsgemäßen Bremsbelägen für Schienenfahrzeuge, die eine Mehrzahl von Reibelementen mit metallischen Belagträgern und einzelnen Sintermetallbelägen an einer übergeordneten Trägerplatte aufweisen.

Insofern führt die Erfindung zu einem Bremsbelag, der die Vorteile eines nicht metallischen Reibbelages (Vermeidung von Quietschgeräuschen) mit den Vorteilen der metallischen Reibbeläge, also Reibbelägen aus Sintermetall, vereinigt, als da sind: die genannte hohe Temperaturbeständigkeit und die nicht vorhandene Geruchs- oder Rauchbelästigung, wobei insbesondere die hohe Temperaturbeständigkeit in Verbindung mit Bremsscheiben aus Stahl oder Grauguss gegeben ist.

Um die bei dem Bremsvorgang auftretenden hohen Querkräfte zu übertragen, ist das Dämpfungselement in Form einer Dämpfungsschicht aus entsprechend beanspruchbaren Materialien gefertigt. Beispielhaft sind zu nennen: Gewebe aus hochtemperaturfesten Garnen, aus denen aufeinander liegende, zu Matten gewebte Einzelschichten gefertigt sein können; Lagen von aufeinander liegenden dünnen metallischen Blechen; Lagen von Hochtemperatur-Papieren, die bis zu einer Hitzebeständigkeit von 1200° Celsius im Handel erhältlich sind, oder Drahtgeweben. Nicht geeignet erscheinen Elastomere.

Bevorzugt besteht die Dämpfungsschicht aus mehreren Lagen verschiedener Werkstoffe. Dabei werden dünne metallische Formteile und Dämpfungsschichten abwechselnd geschichtet.

Die metallischen Formteile sind so dimensioniert, dass ihre Schwingeigenfrequenz in etwa der Frequenz des Bremsbelages entspricht, die zu den genannten Quietschgeräuschen führt. Die angeregte Schwingamplitude wird durch die benachbarten Dämpfungslagen sozusagen aufgezehrt, die Schwingungsenergie also "vernichtet".

Je nach Dicke der einzelnen Zwischenlage können bis zu 10 einzelne Zwischenlagen angeordnet sein, bevorzugt sind zwischen 1 und 5 Zwischenlagen vorgesehen.

Die metallischen Formteile innerhalb einer Dämpfungsschicht können aus unterschiedlichen Werkstoffen bestehen, beispielsweise Stahl und Kupfer. Dadurch werden bei gleicher Geometrie unterschiedliche Eigenfrequenzen erreicht.

Wesentlich ist, dass die Dämpfungsschicht in ihrem Verhalten elastisch oder quasi elastisch ist, um eine Dämpfung der das Quietschen verursachenden Schwingungen zu erreichen.

Insbesondere bei Bremsbelägen, wie sie aus der bereits zitierten EP 0 837 260 B1, aber auch aus der EP 0 784 761 B1 oder der DE 197 09 962 C1 bekannt sind, lässt sich die Erfindung besonders wirkungsvoll realisieren.

Bei diesen Bremsbelägen lagern die Reibbeläge mit einer kugelabschnittsförmigen Rückseite in daran angepassten kalottenartigen Vertiefungen der Trägerplatte, wobei das den Reibbelag bildende Sintermetall mit einer Elementträgerplatte verbunden ist, die die kugelabschnittsförmige Ausbeulung aufweist.

Diese innere Belagträgerplatte weist eine daran angepasste äußere Anschlussplatte auf, die in der Kalotte liegt und zwischen denen die Dämpfungsschicht zur Dämpfung angeordnet ist. Diese Dämpfungsschicht kann sowohl lose eingelegt sein als auch mit einer oder beiden der benachbarten Platten verbunden sein.

Wirkt eine Belaganpresskraft durch eine Zuspannvorrichtung sowie eine tangentiale Reibkraft auf das Reibelement während des Bremsvorganges, so wird die resultierende Kraft radial durch die Kugelflächen in die Trägerplatte geleitet.

Die quasi elastische Dämpfungsschicht führt zu einer Trennung der Metallteile mit der Folge einer Dämpfung der angeregten, das Quietschen verursachenden Schwingungen.

Aber selbst bei Verzicht auf die Dämpfungsschicht wird eine Schwingungsdämpfung allein schon durch die Reibung der beiden aufeinander liegenden Elementträgerplatten erreicht.

Der erfindungsgemäße Bremsbelag zeichnet sich überdies durch einen sehr einfachen Aufbau aus, wobei selbst bereits ausgelieferte und im Serieneinsatz sich befindende Bremsbeläge nachrüstbar sind. Das Funktionsprinzip des Belages wird durch den geschilderten Schichtaufbau nicht beeinträchtigt.

Die Standzeit nachgeordneter Bauteile, wie beispielsweise Tellerfedern, mit denen die Reibelemente rückseitig an der Trägerplatte angeschlossen sind, wird durch die vorhandene wärmeisolierende Wirkung der Dämpfungsschicht gesteigert, woraus sich eine durchaus nennenswerte Senkung der Betriebskosten ergibt.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

Es zeigen:
- Figur 1: einen Teilausschnitt eines erfindungsgemäßen Bremsbelages in einer Draufsicht
- Figuren 2 bis 5: jeweils unterschiedliche Ausführungsbeispiele in einem Teilausschnitt des Bremsbelages in geschnittenen Seitenansichten

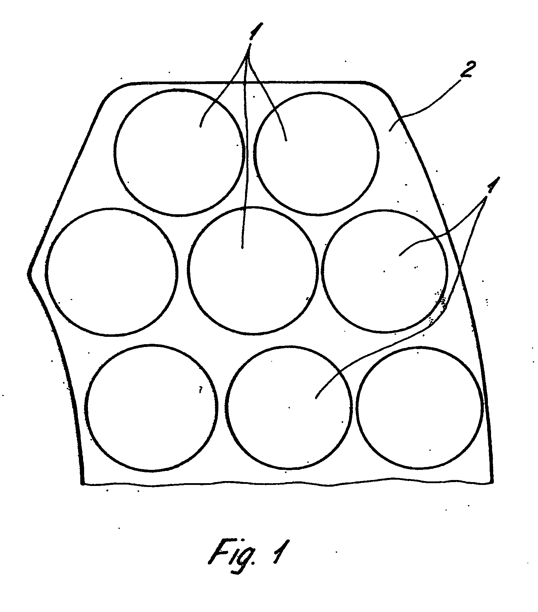

In der Figur 1 ist ein Bremsbelag für eine Scheibenbremse eines Fahrzeuges, insbesondere eines Schienenfahrzeuges, dargestellt, der eine Trägerplatte 2 aufweist, an der mehrere Reibelemente 1 befestigt sind, die bei Bremsbetätigung an die Reibfläche einer nicht dargestellten Bremsscheibe anpressbar sind. Dabei besteht jedes Reibelemente 1 aus einem Belagträger 4, der mit der Trägerplatte 1 in Verbindung steht, und einem mit dem Belagträger 4 verbundenen Reibbelag 3.

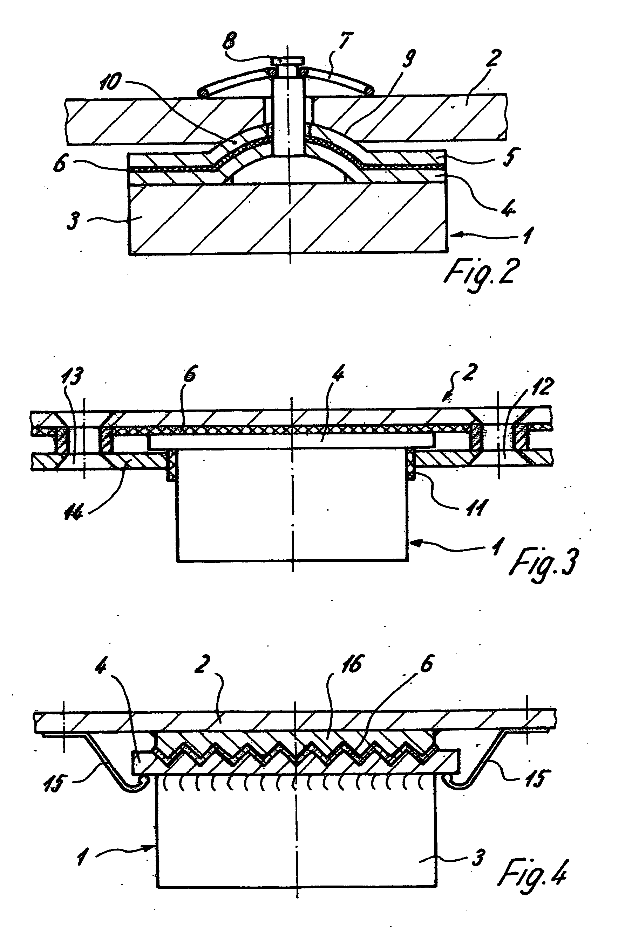

Bei dem in der Figur 2 gezeigten Ausführungsbeispiel ist jedes Reibelement 1 kippbar an der Trägerplatte 2 gelagert, wozu an dem Belagträger 4 ein Verbindungszapfen 8 angeschlossen ist, der die Trägerplatte 2 durchtritt und rückseitig mittels einer Feder, beispielsweise einer Klammerfeder, die sich an der Trägerplatte 2 abstützt und in den Verbindungszapfen 8 eingreift, gehalten wird.

Für eine begrenzte Bewegung ist das Reibelement in einer Kalotte 9 der Trägerplatte 2 gelagert, wobei das Reibelement 1 auf seiner der Trägerplatte 2 zugewandten Seite eine kugelabschnittförmige Ausformung 10 aufweist.

Diese in der Kalotte 9 der Trägerplatte 2 einliegende Ausformung 10 ist in eine Anschlussplatte 5 eingebracht, deren Querschnittskontur an die der Belagträgerplatte 4 angepasst ist.

Zwischen der Anschlussplatte 5 und der Belagträgerplatte 4 ist eine Dämpfungsschicht 6 angeordnet und mit der Anschlussplatte 5 und der Belagträgerplatte 4 verbunden, durch die bei einem Bremsvorgang entstehende Schwingungen zumindest so weit gedämpft werden, dass keine Quietschgeräusche entstehen.

Die Anschlussplatte 5 und die Belagträgerplatte 4, ohne die Dämpfungsschicht 6, bildeten bislang eine einstückige Einheit. Wie sich überraschend gezeigt hat, reicht schon allein schon die stoffliche Trennung in eben diese Anschlussplatte 5 und die Belagträgerplatte 4 aus um die sich im Fall der Einstückigkeit bildende Schallbrücke zu unterbrechen. Ein Optimum der Dämpfung hingegen wird durch das Einfügen der Dämpfungsschicht 6 erreicht.

In der Figur 3 ist eine Ausführungsvariante gezeigt, bei der das Reibelement 1 durch eine Maskenplatte 14 an der Trägerplatte 2 gehalten ist, wobei die Maskenplatte 14 durch Niete 12, 13 mit der Trägerplatte 2 verbunden ist. Das Reibelement 1 liegt an der Trägerplatte 2 an, wobei zwischen dem Belagträger 4, der den Reibbelag 3 aufnimmt, und der Trägerplatte 2 die Dämpfungsschicht 6 angeordnet ist.

Um eine Übertragung von Schallschwingungen auf die Maskenplatte 14 und über die Niete 12, 13 auf die Trägerplatte 2 zu vermeiden, ist im Durchtrittsbereich des Reibbelages 3 durch die Maskenplatte 14 ebenfalls eine Dämpfungsschicht 11 angeordnet, die den Reibbelag 3 zumindest im angrenzenden Überdeckungsbereich der Maskenplatte 14 umschließt.

Je nach Anforderung können die Dämpfungsschichten 6, 11 bei den dargestellten Ausführungsbeispielen lose angeordnet sein oder fest mit angrenzenden Bauteilen verbunden sein.

Dies trifft gleichermaßen auf die Dämpfungsschicht 6 zu, die bei der in der Figur 4 gezeigten Ausführungsvariante eines Bremsbelages dargestellt ist.

Hier wird das Reibelement 1 durch Halteklammern 15 an der Trägerplatte 2 gehalten, die sich am Belagträger 4 abstützen und andererseits mit der Trägerplatte 2 fest verbunden sind.

Im übrigen ist der Belagträger 4 auf seiner dem Reibbelag 3 abgewandten Seite mit einer radialen, parallelen oder konzentrischen Verzahnung versehen, die formschlüssig in ein an diese Konturierung angepasstes Auflager 16 eingreift, das fest mit der Trägerplatte 2 verbunden ist.

Zwischen dem Auflager 16 und dem Belagträger 4 ist die Dämpfungsschicht 6 eingelassen. Dabei kann die Dämpfungsschicht 6 entsprechend der Verzahnung vorgeformt sein. Bei entsprechender Auswahl des Materials der Dämpfungsschicht 6 kann die Formung auch erst beim Zusammenfügen des Reibelementes 1 mit der Trägerplatte 1 erfolgen.

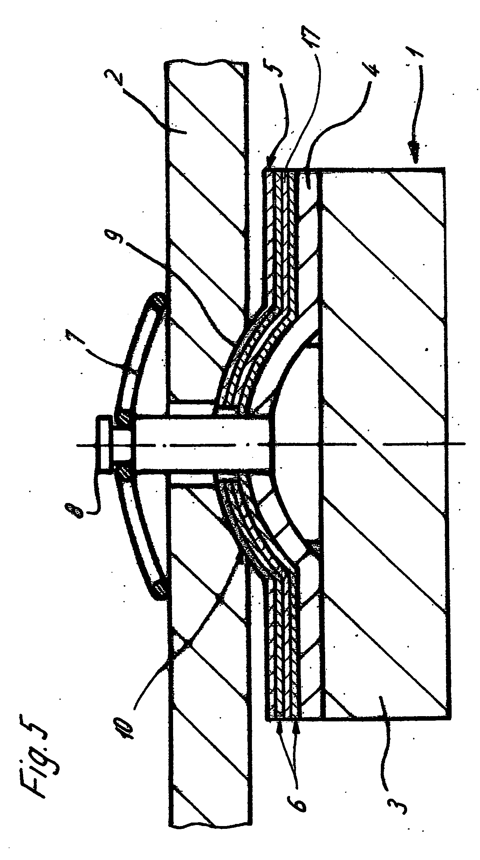

Das in der Figur 5 gezeigte Beispiel entspricht im wesentlichen dem in der Figur 2 dargestellten. Allerdings sind hier mehrere, konkret 2 Dämpfungsschichten 6 abständig zueinander angeordnet und durch eine dazwischen liegende Metallplatte 17 getrennt.

Jede der Dämpfungsschichten, auch bei den Ausführungsbeispielen gemäß den Figuren 2 bis 4, kann aus mehreren Lagen unterschiedlicher Werkstoffe bestehen, die unter anderem aus verschiedenen Metallen gebildet sein können. Auch die zwischen zwei Dämpfungsschichten 6 angeordnete Metallplatte 17 kann aus einem gegenüber der Anschlussplatte 5 und dem Belagträger 4 unterschiedlichen Material bestehen.

### Bezugszeichenliste

- 1: Reibelement
- 2: Trägerplatte
- 3: Reibbelag
- 4: Belagträger
- 5: Anschlussplatte
- 6: Dämpfungsschicht
- 7: Keder
- 8: Verbindungszapfen
- 9: Kalotte
- 10: Kugelabschnittförmige Ausformung
- 11: Dämpfungsschicht
- 12: Niet
- 13: Niet
- 14: Maskenplatte
- 15: Halteklammer
- 16: Auflager
- 17: Metallplatte

## Patentansprüche

1. Bremsbelag einer Scheibenbremse eines Schienenfahrzeuges, mit
a) mehreren an einer Trägerplatte (2) befestigten Reibelementen (1),
b) die jeweils einen metallischen Belagträger (4) und einen an diesem befestigten metallischen Reibbelag (3) aufweisen, wobei
c) zwischen jedem Reibelement (1) und der Trägerplatte (2) zur Minderung der Übertragung von Schallschwingungen ein Dämpfungselement vorgesehen ist
**dadurch gekennzeichnet, dass**
d) das Dämpfungselement aus einer schwingungsdämpfenden, hochtemperaturbeständigen und Querkräfte übertragenden Dämpfungsschicht (6) besteht,
e) die aus mehreren Einzellagen unterschiedlicher Werkstoffe gebildet ist.

2. Bremsbelag nach Anspruch 1, **dadurch gekennzeichnet, dass** das Material der Dämpfungsschicht (6) elastisch oder quasi elastisch ist.

3. Bremsbelag nach Anspruch 1 oder 2, **dadurch gekennzeichnet, dass** die Dämpfungsschicht (6) aus hochtemperaturbeständigen Geweben, Vliesen oder dergleichen besteht.

4. Bremsbelag nach Anspruch 1 oder 3, **dadurch gekennzeichnet, dass** zwischen zwei Dämpfungsschichten (6) eine Metallplatte (17) angeordnet ist.

5. Bremsbelag nach Anspruch 1, **dadurch gekennzeichnet, dass** jede Dämpfungsschicht (6) mit mindestens einer Schicht aus einem Metall versehen ist.

6. Bremsbelag nach Anspruch 5, **dadurch gekennzeichnet, dass** jede Metallschicht einer Dämpfungsschicht (6) so dimensioniert ist, dass ihre Schwingfrequenz etwa der Frequenz des Bremsbelages entspricht, der zu einem Quietschgeräusch führt.

7. Bremsbelag nach Anspruch 6, **dadurch gekennzeichnet, dass** die Metallschichten jeder Dämpfungsschicht (6) aus unterschiedlichen Werkstoffen, vorzugsweise Stahl und Kupfer besteht.

8. Bremsbelag nach Anspruch 1, **dadurch gekennzeichnet, dass** jede Dämpfungsschicht (6) bis zu 10, vorzugsweise 1 bis 5 Einzellagen aufweist.

9. Bremsbelag nach Anspruch 1 oder 3, **dadurch gekennzeichnet, dass** die Dämpfungsschicht (6) aus Drahtgewebe, Lagen von dünnen Blechen oder dergleichen, aus Geweben aus hochtemperaturfesten Garnen und/oder aus hochtemperaturbeständigen Papieren besteht.

10. Bremsbelag nach Anspruch 1, **dadurch gekennzeichnet, dass** das Dämpfungselement ferner eine Anschlussplatte (5) aufweist, mit der das Reibelement (1) an der Trägerplatte (2) anliegt.

11. Bremsbelag nach Anspruch 10, **dadurch gekennzeichnet, dass** die Dämpfungsschicht (6) zwischen dem jeweiligen Belagträger (4) des jeweiligen Reibelementes (1) und der Anschlussplatte (5) angeordnet ist.

12. Bremsbelag nach Anspruch 10 oder 11, **dadurch gekennzeichnet, dass** die Dämpfungsschicht (6) lose zwischen dem Belagträger (4) und der Anschlussplatte (5) liegt.

13. Bremsbelag nach Anspruch 1 oder 10, **dadurch gekennzeichnet, dass** die Dämpfungsschicht (6) mit dem Belagträger (4) und/oder der Anschlussplatte (5) fest verbunden ist.

14. Bremsbelag nach Anspruch 1, **dadurch gekennzeichnet, dass** die Dämpfungsschicht (6) unmittelbar auf der Trägerplatte (2) aufliegt und an dieser befestigt ist.

15. Bremsbelag nach Anspruch 1, **dadurch gekennzeichnet, dass** die Trägerplatte (2), jedem Reibelement (1) zugeordnet, ein Auflager (16) aufweist, an dem das Reibelement (1) verdrehgesichert durch Formschluss anliegt.

16. Bremsbelag nach Anspruch 15, **dadurch gekennzeichnet, dass** das Auflager (16) und der zugeordnete Belagträger (4) des Reibelementes (1) mit ineinander greifenden Verzahnungen versehen sind.

17. Bremsbelag nach Anspruch 16, **dadurch gekennzeichnet, dass** zwischen den Verzahnungen die Dämpfungsschicht (6) angeordnet ist.

18. Bremsbelag nach einem der vorhergehenden Ansprüche, **dadurch gekennzeichnet, dass** jedes Reibelement (1) durch eine Maskenplatte (14) an der Trägerplatte (2) gehalten ist, wobei jeweils zwischen dem Belagträger (4), der den Reibbelag (3) aufnimmt, und der Trägerplatte (2) sowie im Durchtrittsbereich des Reibbelages (3) durch die Maskenplatte (14) jeweils eine Dämpfungsschicht (11) angeordnet ist.

## Claims

1. Brake lining of a disk brake of a rail vehicle, having
a) a plurality of friction elements (1) fastened to a base plate (2),
b) each of which has a metal lining support (4) to which is fastened a metallic friction lining (3),
c) a damping element being provided between each friction element (1) and the base plate (2) to reduce the transmission of acoustic vibrations,
**characterised in that**
d) the damping element consists of a vibration-reducing, high temperature resistant damping layer (6) which transmits shear forces and
e) is formed by a plurality of individual layers of different materials.

2. Brake lining in accordance with claim 1,
**characterised i n that**
the material of the damping layer (6) is elastic or quasi-elastic.

3. Brake lining in accordance with claim 1 or 2,
**characterised in that**
the damping layer (6) is made of high temperature resistant woven or non-woven fabrics or similar materials.

4. Brake lining in accordance with claim 1 or 3,
**characterised in that**
a metal plate (17) is positioned between two damping layers (6).

5. Brake lining in accordance with claim 1,
**characterised in that**
each damping layer (6) is provided with at least one layer made of metal.

6. Brake lining in accordance with claim 5,
**characterised in that**
the dimensions of each metal layer in each damping layer (6) are such that its vibration frequency corresponds approximately to the frequency of the brake lining which leads to a squealing noise.

7. Brake lining in accordance with claim 6,
**characterised in that**
the metal layers of each damping layer (6) are made of different materials, preferably steel and copper.

8. Brake lining in accordance with claim 1,
**characterised in that**
each damping layer (6) has up to 10 and preferably 1 to 5 individual layers.

9. Brake lining in accordance with claim 1 or 3,
**characterised in that**
the damping layer (6) is made of woven wire fabric, layers of thin sheet metal or similar materials, of woven fabrics made from high temperature resistant yarns and/or of high-temperature papers.

10. Brake lining in accordance with claim 1,
**characterised in that**
the damping element also has a connecting plate (5) at which the friction element (1) sits on the base plate (2).

11. Brake lining in accordance with claim 10,
**characterised in that**
the damping layer (6) is positioned between the lining support (4) of each friction element (1) and the connecting plate (5).

12. Brake lining in accordance with claim 10 or 11,
**characterised in that**
damping layer (6) lies loose between the lining support (4) and the connecting plate (5).

13. Brake lining in accordance with claim 1 or 10,
**characterised in that**
the damping layer (6) is joined fast to the lining support (4) and/or the connecting plate (5).

14. Brake lining in accordance with claim 1,
**characterised in that**
the damping layer (6) lies directly on the base plate (2) and is fastened thereto.

15. Brake lining in accordance with claim 1,
**characterised in that**
the base plate (2), assigned to each friction element (1), has a support (16) on which the friction element (1) sits in a positive connection such that it is unable to rotate.

16. Brake lining in accordance with claim 15,
**characterised in that**
the support (16) and the assigned lining support (4) of the friction element (1) are provided with interlocking teeth.

17. Brake lining in accordance with claim 16,
**characterised in that**
the damping layer (6) is provided between the teeth.

18. Brake lining in accordance with one of the preceding claims,
**characterised in that**
each friction element (1) is held onto the base plate (2) by a mask plate (14), a damping layer (11) being positioned between the lining support (4) receiving the friction lining (3) and the base plate (2), and in the area in which the friction lining (3) passes through the mask plate.

## Revendications

1. Garniture d'un frein à disque d'un véhicule ferroviaire, comprenant
a) plusieurs éléments (1) de frottement fixés à un plateau (2) de support,
b) qui ont respectivement un porte-garniture (4) métallique et une garniture (3) métallique de frottement fixée sur celui-ci, dans laquelle
c) il est prévu entre chaque élément (1) de frottement et le plateau (2) de support un élément d'amortissement pour amoindrir la transmission de vibrations sonores,
**caractérisée en ce que**
d) l'élément d'amortissement est constitué d'une couche (6) d'amortissement atténuant les vibrations, résistant aux températures hautes et transmettant des forces transversales
e) qui est formée de plusieurs strates individuelles de matériaux différents.

2. Garniture de frein suivant la revendication 1, **caractérisée en ce que** le matériau de la couche (6) d'amortissement est élastique ou quasi élastique.

3. Garniture de frein suivant la revendication 1 ou 2, **caractérisée en ce que** la couche (6) d'amortissement est en tissus, non-tissés ou analogues résistants aux températures hautes.

4. Garniture de frein suivant la revendication 1 ou 3, **caractérisée en ce qu'**une plaque (17) métallique est disposée entre deux couches (6) d'amortissement.

5. Garniture de frein suivant la revendication 1, **caractérisée en ce que** chaque couche (6) d'amortissement est pourvue d'au moins une couche en un métal.

6. Garniture de frein suivant la revendication 5, **caractérisée en ce que** chaque couche métallique d'une couche (6) d'amortissement a des dimensions telles que sa fréquence d'oscillation correspond à peu près à la fréquence de la garniture de frein, qui donne un bruit de couinement.

7. Garniture de frein suivant la revendication 6, **caractérisée en ce que** les couches métalliques de chaque couche (6) d'amortissement sont en des matériaux différents, de préférence en acier et en cuivre.

8. Garniture de frein suivant la revendication 1, **caractérisée en ce que** la couche (6) d'amortissement a jusqu'à 10 et de préférence de 1 à 5 strates individuelles.

9. Garniture de frein suivant la revendication 1 ou 3, **caractérisée en ce que** la couche (6) d'amortissement est constituée de toiles de fil métalliques, de strates de tôle mince ou analogues, de tissus en fil résistants aux températures hautes et/ou de papiers résistants aux températures hautes.

10. Garniture de frein suivant la revendication 1, **caractérisée en ce que** l'élément de l'amortissement a en outre une plaque (5) de liaison, par laquelle l'élément (1) de frottement s'applique au plateau de support.

11. Garniture de frein suivant la revendication 10, **caractérisée en ce que** la couche (6) d'amortissement est disposée entre le porte-garniture (4) de l'élément (1) de frottement respectif et la plaque (5) de liaison.

12. Garniture de frein suivant la revendication 10 ou 11, **caractérisée en ce que** la couche (6) d'amortissement est disposée de manière lâche entre le porte-garniture (4) et la plaque (5) de liaison.

13. Garniture de frein suivant la revendication 1 ou 10, **caractérisée en ce que** la couche (6) d'amortissement est assemblée rigidement au porte-garniture (4) et/ou à la plaque (5) de liaison.

14. Garniture de frein suivant la revendication 1, **caractérisée en ce que** la couche (6) d'amortissement s'applique directement au plateau (2) de support et y est fixée.

15. Garniture de frein suivant la revendication 1, **caractérisée en ce que** le plateau (2) de support associé à chaque élément (1) de frottement comporte un appui (16) auquel l'élément (1) de frottement s'applique par complémentarité de forme sans possibilité de torsion.

16. Garniture de frein suivant la revendication 15, **caractérisée en ce que** l'appui (16) et le porte-garniture (4) associé de l'élément (1) de frottement sont munis de dentures qui s'interpénètrent.

17. Garniture de frein suivant la revendication 16, **caractérisée en ce que** la couche (6) d'amortissement est disposée entre les dentures.

18. Garniture de frein suivant l'une des revendications précédentes, **caractérisée en ce que** chaque élément (1) de frottement est maintenu par une plaque (14) formant masque sur le plateau (2) de support, une couche (11) d'amortissement étant disposée respectivement entre le porte-garniture (4) qui reçoit la garniture (3) de frottement et le plateau (2) de support, ainsi que dans la partie de la garniture (3) de frottement, qui est traversée par la plaque (4) formant masque.
